# EUROPÄISCHE PATENTSCHRIFT

(11) **EP 4 543 702 B1**
(45) Veröffentlichungstag und Bekanntmachung des Hinweises auf die Patenterteilung: **01.04.2026**
(21) Anmeldenummer: 24717220.8
(22) Anmeldetag: 08.04.2024
(51) Int. Cl.: B60K 35/23, B60K 35/231, B60K 37/00

(54) **KRAFTFAHRZEUG MIT ANORDNUNG ZUM KÜHLEN EINES SCHWARZDRUCK-ANZEIGESYSTEMS**
MOTOR VEHICLE WITH ASSEMBLY FOR COOLING A BLACK PRINT DISPLAY SYSTEM
VÉHICULE AUTOMOBILE AVEC ENSEMBLE POUR LE REFROIDISSEMENT D'UN SYSTÈME D'AFFICHAGE D'IMPRESSION NOIRE

(30) Priorität: 24.04.2023 DE 102023110366
(43) Veröffentlichungstag der Anmeldung: 30.04.2025
(73) Patentinhaber: AUDI AG, 85057 Ingolstadt (DE)
(72) Erfinder: PELLER, Nikolaus, 85356 Freising (DE); RICHTER, Marcus, 85049 Ingolstadt (DE); REIMANN, Markus, 85051 Ingolstadt (DE); ALBL, Sebastian, 85055 Ingolstadt (DE)
(74) Vertreter: Hofstetter, Schurack & Partner
(86) Internationale Anmeldenummer: PCT/EP2024/059512
(87) Internationale Veröffentlichungsnummer: WO 2024/223275

(56) Entgegenhaltungen:
- EP-A1- 0 508 323
- DE-A1- 102015 202 457
- US-A1- 2019 182 994
- US-A1- 2020 171 912
- ANONYMOUS: "Continental Head-up Display Across Entire Windshield Enables New Cockpit Design - Continental AG", 1 December 2022 (2022-12-01), XP093182240, Retrieved from the Internet <URL:https://www.continental.com/en/press/press-releases/20221201-ces-scenicviewhud/> [retrieved on 20240704]

## Beschreibung

Die Erfindung betrifft ein Kraftfahrzeug mit einer Anordnung, wobei die Anordnung im Bereich einer Instrumententafel des Kraftfahrzeugs angeordnet ist. Bei einem Schwarzdruck-Anzeigesystem handelt es sich um ein Anzeigesystem, um auf einfachste Weise mittels Reflexionen einem Insassen eines Kraftfahrzeugs, insbesondere dem Fahrer und dem Beifahrer des Kraftfahrzeugs, Informationen anzuzeigen. Hierbei kann mittels einer Anzeigeeinheit, wie zum Beispiel eines Displays oder eines Tablets, zumindest ein Teilbereich der Schwarzdruckfläche beleuchten werden. Die Schwarzdruckfläche weist eine reflektierende Eigenschaft, welche beispielsweise durch eine reflektierende Oberfläche hergestellt wurde, auf, sodass die erzeugten Bilder auf die Anzeigeeinheit mittels Reflexion, also durch Reflektieren des ausgestalteten Bildes der Anzeigeeinheit, in Richtung eines Fahrers und/oder eines Beifahrers gerichtet werden.

In Kraftfahrzeugen werden Klimaanlagen, Heizungsvorrichtungen, Ventilationsvorrichtungen und/oder Luftkonditionierungsvorrichtungen, wie beispielsweise aus der EP 1 481 825 A1 und der DE 60 204 006 496 T2 bekannt, dazu verwendet, um ein Klima beziehungsweise Raumklima beziehungsweise eine Temperatur im Fahrgastinnenraum des Kraftfahrzeugs anzupassen.

Die US 2020/171912 A1 offenbart ein Head-Up-Display, welches für einen beweglichen Körper eingesetzt wird, der eine Windschutzscheibe, eine Klimaanlage mit Ausblasöffnung und einen Ausblasauslass umfasst. Das Head-up-Display umfasst eine Lichtquelle, die Anzeigelicht aussendet, und ein Strahlenganggehäuse, das darin einen Strahlengang für das Anzeigelicht definiert. Das Displaylicht erreicht die Windschutzscheibe und die Informationen werden auf der Windschutzscheibe angezeigt. Das Head-up-Display umfasst außerdem einen Klimaanlagenkanal, der einen Luftströmungspfad definiert. Die Lichtquelle ist dem Luftstrom ausgesetzt und strahlt in diesen Wärme ab. Das Gehäuse des optischen Pfads und der Klimakanal enthalten üblicherweise eine Trennwand, die den Luftströmungspfad und den optischen Pfad trennt.

Ferner offenbart die US 2019/182994 A1 ein System zum Kühlen eines Head-Up-Displays (HUD). Ein Fahrzeug kann ein HUD enthalten, das Wärme erzeugt und daher möglicherweise gekühlt werden muss. In einem Beispiel beziehen sich die vorliegenden Techniken auf ein HUD-Modul zum Aussenden von Licht mit einer Bilderzeugungseinheit (PGU). Die Spezifikation kann einen an das HUD-Modul angeschlossenen Kühlkörper umfassen, um die Wärme durch Leitung von der PGU abzuleiten und durch Konvektion abzuleiten. Die Techniken können außerdem einen Heizungs-, Lüftungs- und Klimaanlagenkanal (HVAC) mit einem Auslass umfassen, um den Luftstrom vom HVAC-Kanal zum Kühlkörper zu leiten.

Des Weiteren offenbart die EP 0 508 323 A1 ein Auto-Anzeigegerät vom Typ Head-Up-Display, das die Wahl der Einstellposition eines Blinkers frei gestaltet und eine gute Fernanzeige bietet. Eine Anzeige ist in einem Armaturenbrett eingebaut. In einem oberen Abschnitt des Armaturenbretts ist eine Öffnung ausgebildet, durch die Licht von der Anzeige des Indikators hindurchtreten und von der Windschutzscheibe zum Sichtpunkt des Fahrers reflektiert werden kann. Zwischen der Anzeige und der Öffnung ist eine transparente Frontplatte angeordnet. Des Weiteren ist innerhalb des Armaturenbretts ein Defrosterkanal angeordnet. Die Öffnung dient zugleich als Auslassöffnung des Defrosterkanals. Wenn ein Defrosterschalter eingeschaltet wird, strömt die Luft durch den Kanal und steigt entlang der Frontplatte auf, um durch die Öffnung im Armaturenbrett auf die Oberfläche der Windschutzscheibe geblasen zu werden.

Eine Aufgabe der vorliegenden Erfindung besteht darin, eine Überhitzung eines Schwarzdruck-Anzeigesystems zu verhindern.

Diese Aufgabe wird durch ein Kraftfahrzeug gemäß dem unabhängigen Patentanspruch 1 gelöst. Sinnvolle Weiterbildungen ergeben sich aus den abhängigen Patentansprüchen.

Durch eine in einem Bereich einer Instrumententafel eines erfindungsgemäßen Kraftfahrzeugs angeordnete Anordnung kann eine effiziente und insbesondere automatisierte beziehungsweise automatische Kühlung des Schwarzdruck-Anzeigesystems durchgeführt werden. Hierbei können mit Hilfe des Kühlsystems Bereiche und/oder Komponenten des Schwarzdruck-Anzeigesystems gekühlt werden. Dies erfolgt mittels eines Luftstroms zur Entwärmung beziehungsweise Kühlung. Das Kühlsystem kann die Kühlung des Schwarzdruck-Anzeigesystems auf Basis des jeweiligen Betriebszustands beziehungsweise Zustands des Schwarzdruck-Anzeigesystems zurückführen. Somit kann insbesondere eine Überhitzung des Schwarzdruck-Anzeigesystems verhindert werden, sodass die Lebensdauer erhöht und insbesondere Ausfallzeiten des Schwarzdruck-Anzeigesystems verringert werden können.

Beispielsweise kann mit Hilfe des Kühlsystems der Luftstrom entsprechend erzeugt und auf einen entsprechend zu kühlenden Bereich des Schwarzdruck-Anzeigesystems gerichtet beziehungsweise geleitet werden.

Beispielsweise kann es sich bei dem Luftstrom um einen kalten Luftstrom beziehungsweise um Kühlluft handeln. Dabei weist der Luftstrom eine solche Temperatur beziehungsweise einen solchen Temperaturbereich auf, sodass dieser eine Entwärmung und somit eine Aufnahme einer Wärme des Schwarzdruck-Anzeigesystems durchführen kann, um dadurch einen Kühlvorgang des Schwarzdruck-Anzeigesystems durchführen zu können.

Beispielsweise kann der Luftstrom eine Temperatur zwischen -5°C und 20°C, insbesondere im Bereich zwischen 8°C und 15°C aufweisen.

In einer bestimmungsgemäßen Verwendung beziehungsweise einer bestimmungsgemäßen Integration der Anordnung in einem Kraftfahrzeug kann mit Hilfe des Kühlsystems eine automatisierte, insbesondere systemseitig überwachte, Kühlung des Schwarzdruck-Anzeigesystems durchgeführt werden.

Mit anderen Worten ausgedrückt kann die Reinigungseinrichtung als Schwarzdruck-Anzeigesystem-Kühlsystem bezeichnet werden.

Das Kühlsystem kann wiederum eine entsprechende Überwachungs- und Steuerungseinheit aufweisen, welche zum einen den Betriebszustand des Schwarzdruck-Anzeigesystems erfassen beziehungsweise detektieren kann und je nach aktueller Situation des Schwarzdruck-Anzeigesystems einen entsprechenden, insbesondere automatisierten beziehungsweise automatischen, Kühlvorgang des Schwarzdruck-Anzeigesystems vornehmen kann. Hierzu bedient sich das Kühlsystem eines Luftstroms, welcher mit Hilfe des Kühlsystems erzeugt werden kann. Mit Hilfe des Luftstroms, welcher beispielsweise durch ein Gebläse beziehungsweise eine Gebläseeinheit erzeugt werden kann, kann die Anzeigeeinheit, die Schwarzdruckfläche und/oder sonstige Komponenten des Schwarzdruck-Anzeigesystems gekühlt werden. Dies hat vor allem für den Betrieb des Schwarzdruck-Anzeigesystems Vorteile, da durch hohe Temperaturen eine Leistung des Schwarzdruck-Anzeigesystems beeinträchtigt werden kann.

Beispielsweise kann das Schwarzdruck-Anzeigesystem als "Black-Print-Display"-System bezeichnet werden. Die Anzeigeeinheit kann wiederum als Black-Print-Display ausgebildet sein.

Bei dem Kühlsystem kann es sich um eine elektrische, mechanische oder elektromechanische Einrichtung handeln.

Es ist vorgesehen, dass die Anordnung zumindest einen Kühlkanal zum Bereitstellen des Luftstroms aufweist, wobei der zumindest eine Kühlkanal zumindest bereichsweise an der Anzeigeeinheit angeordnet ist. Je nach Ausgestaltung des Schwarzdruck-Anzeigesystems und insbesondere je nach Einbausituation der Anordnung in einem Kraftfahrzeug kann ein Kühlkanal oder mehrere Kühlkanäle vorgesehen sein.

Beispielsweise kann der Kühlkanal als Luftkanal bezeichnet werden.

Bei dem Kühlanlage kann es sich um einen Lüftungskanal zur Luftführung handeln. Dementsprechend weist die Anordnung ein Luftleitsystem auf, um entsprechend zur Reinigung des Schwarzdruck-Anzeigesystems den Luftstrom leiten beziehungsweise lenken zu können.

Der zumindest eine Kühlkanal kann zumindest bereichsweise, insbesondere vollständig, an der Anzeigeeinheit angeordnet sein. Dies bedeutet, dass der Kühlkanal beispielsweise an der Anzeigeeinheit anliegend, also die Anzeigeeinheit berührend, angeordnet ist. Somit kann zum einen Platz eingespart werden, und zum anderen kann eine direkte, insbesondere gezielte, Bereitstellung des Luftstroms zum Reinigen der Anzeigeeinheit vorgegeben werden. Insbesondere kann der zumindest eine Kühlkanal in einem Bereich um die Anzeigeeinheit angeordnet werden.

In einem Ausführungsbeispiel ist vorgesehen, dass der zumindest eine Kühlkanal eine Luftauslass-Einrichtung aufweist, welche zumindest einen Luftauslass aufweist, welcher zu der Anzeigeeinheit und/oder zu der Schwarzdruckfläche gerichtet ist. Insbesondere kann die Luftauslass-Einrichtung je nach Ausgestaltung der Anordnung und insbesondere je nach Ausgestaltung des Schwarzdruck-Anzeigesystems mehrere Luftauslässe aufweisen.

Beispielsweise kann für jede Komponente des Schwarzdruck-Anzeigesystems ein Luftauslass in dem zumindest einen Kühlkanal vorhanden sein. Somit kann an den verschiedensten Stellen des Schwarzdruck-Anzeigesystems eine Kühlung vorgenommen werden. Hierbei kann der zumindest eine Luftauslass oder die mehreren Luftauslässe so in dem Kühlkanal angeordnet sein, dass diese zu der Anzeigeeinheit und/oder zu der Schwarzdruckfläche gerichtet sind und somit ein gezielter Luftstrom zum Kühlen ausgelassen beziehungsweise geblasen werden kann.

In einem Ausführungsbeispiel weist die Anordnung eine Steuerungseinrichtung zum Steuern der Luftauslass-Einrichtung auf, wodurch eine Luftauslassrichtung des zumindest einen Luftauslasses einstellbar ist. Somit kann eine gezielte Luftführung des Luftstroms vorgenommen werden, um insbesondere genau dort gezielt den Luftstrom leiten beziehungsweise hinleiten zu können, wo eine erhöhte Temperatur im Bereich des Schwarzdruck-Anzeigesystems vorliegt.

Mit Hilfe der Steuerungseinrichtung, welche beispielsweise als elektronische Steuerungseinheit bezeichnet werden kann, kann eine gezielte Kühlung von einem jeweiligen Bereich beziehungsweise einer jeweiligen Komponente des Schwarzdruck-Anzeigesystems erfolgen. Beispielsweise kann der zumindest eine Luftauslass eine Lamelle aufweisen, welche durch die mit der Steuerungseinheit angesteuerte Luftauslass-Einrichtung in ihrer Orientierung beziehungsweise Position eingestellt beziehungsweise verändert werden kann. Somit kann gezielt die Luftauslassrichtung angepasst werden, um je nach vorliegender Situation das Schwarzdruck-Anzeigesystems kühlen zu können.

In einem Ausführungsbeispiel weist die Anordnung eine Sensoreinheit zum Erfassen des Betriebszustands des Schwarzdruck-Anzeigesystems auf, wobei als Betriebszustand eine Temperatur des Schwarzdruck-Anzeigesystems erfassbar ist. Die Sensoreinheit beziehungsweise eine Detektoreinheit kann als elektronische beziehungsweise sensorische Erfassungseinheit bezeichnet werden, welche beispielsweise mehrere einzelne Teilsensoren aufweist, welche an verschiedensten Bereichen hinsichtlich des Schwarzdruck-Anzeigesystems angeordnet sein können. Somit kann an allen Bereichen des Schwarzdruck-Anzeigesystems eine Überprüfung beziehungsweise Detektion hinsichtlich der Temperatur bzw. Betriebstemperatur vorgenommen werden.

Insbesondere kann die Sensoreinheit je nach Zustand das Kühlsystem und insbesondere die Steuerungseinrichtung ansteuern, um entsprechend einen gezielten Kühlvorgang vornehmen zu können.

Mit Hilfe der im Kraftfahrzeug eingebauten Anordnung können zum einen den Insassen des Kraftfahrzeugs mit Hilfe des Schwarzdruck-Anzeigesystems auf einfachste Art und Weise Informationen in ihrem Sichtfeld beziehungsweise Blickfeld angezeigt werden. Ebenfalls kann mit Hilfe der Anordnung dieses Schwarzdruck-Anzeigesystem, insbesondere kontinuierlich, automatisiert gekühlt werden, sodass das Schwarzdruck-Anzeigesystem effizient betrieben werden kann. Durch ein automatisiertes und insbesondere kontinuierliches Kühlen des Schwarzdruck-Anzeigesystems kann vor allem die Lebensdauer des Schwarzdruck-Anzeigesystems erhöht werden, da durch das Kühlen Ausfälle oder Reparaturen beziehungsweise Wartungen des Schwarzdruck-Anzeigesystems reduziert werden können.

Es ist vorgesehen, dass sich der zumindest eine Kühlkanal in Bezug zu einer Fahrzeugquerachse längs in einem Bereich zwischen der Instrumententafel und einer Frontscheibe des Kraftfahrzeugs erstreckt. Mit anderen Worten ausgedrückt erstreckt sich der Kühlkanal in einem Bereich einer Fensterwurzel der Frontscheibe, sodass sich der Kühlkanal an einer zum Fahrzeugboden des Kraftfahrzeugs gerichteten Seite beziehungsweise Bereich der Frontscheibe befindet. Insbesondere ist der Kühlkanal so angeordnet, dass er von den Insassen des Kraftfahrzeugs nicht gesehen wird und somit für Insassen nicht sichtbar ist.

Der Kühlkanal kann sich in einem Bereich zumindest teilweise, insbesondere vollständig, längs zur Fahrzeugquerachse erstrecken. Somit kann es sich bei dem Bereich um einen solchen Bereich handeln, bei welchem sich die Instrumententafel beziehungsweise das Fahrzeugcockpit und die Frontscheibe beziehungsweise Windschutzscheibe des Kraftfahrzeugs berühren. Durch diese Anordnung kann erreicht werden, dass alle Komponenten des Schwarzdruck-Anzeigesystems gekühlt werden können.

In einem Ausführungsbeispiel ist vorgesehen, dass die Anordnung eine Scheibenenteisungs-Einrichtung aufweist, welche zumindest einen weiteren Luftauslass aufweist, welcher zu der Frontscheibe gerichtet ist. Somit können die Anordnung und insbesondere der Luftkanal mit einer zusätzlichen Funktion beziehungsweise Funktionalität ausgestattet werden, sodass mit einem Kühlkanal im Bereich zwischen der Instrumententafel und der Frontscheibe zum einen das Schwarzdruck-Anzeigesystem vor Verschmutzung gereinigt werden kann als auch die Frontscheibe enteist werden kann. Beispielsweise kann für das Reinigen und für die Scheibenenteisung beziehungsweise Scheibendefrostung ein und derselbe Luftstrom verwendet werden. In diesem Fall kann der Luftstrom so erzeugt werden, dass er für beide Anwendung verwendet werden kann. Hierbei kann zum einen die Geschwindigkeit, mit welcher der Luftstrom aus einem Luftauslass hinausgeblasen wird, angepasst werden. Des Weiteren kann eine Temperatur des Luftstroms beziehungsweise eine Lufttemperatur des Luftstroms entsprechend so angepasst werden, dass diese für die Scheibenenteisung ausreichend präpariert ist.

Des Weiteren ist denkbar, dass mit einer Steuereinheit eine Einheit zum Erzeugen des Luftstroms, wie beispielsweise einer Gebläseeinheit, je nach Anwendungsfall entsprechend angesteuert wird. Somit kann zum einen für das Reinigen des Schwarzdruck-Anzeigesystems ein individuell angepasster Luftstrom erzeugt werden. Für die Scheibenenteisung der Frontscheibe kann wiederum ein dafür individuell erzeugter Luftstrom bereitgestellt werden. Der Kühlkanal kann neben dem zumindest einen Luftauslass zum Reinigen des Schwarzdruck-Anzeigesystems zumindest einen weiteren Luftauslass betreffend die Scheibenenteisungs-Einrichtung aufweisen. Dieser weitere Luftauslass ist so gerichtet, dass ein Luftstrom zur Enteisung der Frontscheibe an die Frontscheibe geblasen beziehungsweise gerichtet werden kann.

Somit weist die Anordnung und insbesondere der Kühlkanal vorteilhafterweise ein Kühlkonzept zum Kühlen des Schwarzdruck-Anzeigesystems als auch ein Scheibendefrostkonzept zum Befreien der Frontscheibe von Vereisung, Eis und/oder Schnee auf. Ebenfalls kann die Scheibenenteisungs-Einrichtung auch dann verwendet werden, wenn die Frontscheibe angelaufen beziehungsweise beschlagen ist.

Es ist vorgesehen, dass an einer zur Frontscheibe abgewandten Seite des zumindest einen Kühlkanals ein Optikelement angeordnet ist, mit welchem ein erzeugtes Bild einer Bilderzeugungseinheit eines Head-up-Displays des Kraftfahrzeugs auf eine lichtdurchlässige Projektionsfläche in einem Bereich der Frontscheibe projizierbar ist. Mit anderen Worten ausgedrückt kann der Kühlkanal neben seiner Verwendung zur Kühlung des Schwarzdruck-Anzeigesystems der Scheibenenteisung der Frontscheibe ebenfalls als Komponente beziehungsweise Teilkomponente eines Head-up-Displays verwendet werden. Somit kann durch die Anordnung und den Einsatz der Anordnung im Kraftfahrzeug ein Bedarf an Komponenten, ein Bedarf an Bauraum reduziert beziehungsweise verringert werden. Somit liefert die erfindungsgemäße Anordnung weitere Synergieeffekte bei dem Einsatz der Anordnung im Kraftfahrzeug.

Durch die Anordnung des Optikelements an der zur Frontscheibe abgewandten beziehungsweise entgegengesetzten Seite des Kühlkanals kann auf zusätzliche Optikelemente, wie Spiegel oder Linsen, betreffend das Head-up-Display verzichtet werden. Somit kann das Head-up-Display einfach und insbesondere platzsparender im Kraftfahrzeug verwendet werden. Beispielsweise kann das Optikelement an der zur Frontscheibe abgewandten Seite des Kühlkanals integriert beziehungsweise teilintegriert sein. Ebenfalls denkbar ist, dass die Oberfläche der zur Frontscheibe abgewandten Seite des Kühlkanals speziell ausgestaltet ist, sodass die Oberfläche dieser Seite als optisches Element für das Head-up-Display dient. Somit kann der Kühlkanal als "Spiegelbank" des Head-up-Displays verwendet werden, sodass mittels des Luftkanals ein Bild des Head-up-Displays auf die lichtdurchlässige Projektionsfläche im Bereich der Frontscheibe projizierbar ist, sodass insbesondere der Fahrer des Kraftfahrzeugs in seinem Sichtfeld beziehungsweise Blickfeld das Bild erfassen kann.

Die Schwarzdruckfläche und die lichtdurchlässige Projektionsfläche sind voneinander getrennte beziehungsweise verschiedene Bereiche auf der Frontscheibe. Insbesondere sind die Schwarzdruckfläche und die lichtdurchlässige Projektionsfläche beabstandet zueinander im Bereich der Frontscheibe angeordnet.

Ein weiterer Aspekt betrifft ein Verfahren zum Kühlen eines Schwarzdruck-Anzeigesystems eines Kraftfahrzeugs, wobei ein Betriebszustand des Schwarzdruck-Anzeigesystems erfasst wird und abhängig von dem Betriebszustand ein Luftstrom erzeugt wird. Der erzeugte Luftstrom wird so geleitet, dass das Schwarzdruck-Anzeigesystem zumindest bereichsweise, insbesondere vollständig, gekühlt wird. Beispielsweise weist die Anordnung und/oder das Kraftfahrzeug Mittel auf, um das soeben geschilderte Verfahren ausführen beziehungsweise durchführen zu können. Mit Hilfe einer Sensoreinheit kann kontinuierlich der Betriebszustand des Schwarzdruck-Anzeigesystems erfasst beziehungsweise detektiert werden, sodass systemseitig je nach Zustand der Betriebs- oder Gehäusetemperatur ein Kühlvorgang automatisch eingeleitet beziehungsweise durchgeführt werden kann. Hierbei erfolgt eine Erzeugung eines Luftstroms, welcher beispielsweise mit Hilfe eines Kühlkanals so geleitet beziehungsweise geführt werden kann, derart, dass dieser gezielt beziehungsweise gerichtet dort bereitsteht, wo eine Überhitzung des Schwarzdruck-Anzeigesystems vorliegt oder unmittelbar auftreten kann.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Steuervorrichtung kann eine Datenverarbeitungsvorrichtung oder eine Prozessoreinrichtung aufweisen, die dazu eingerichtet ist, eine Ausführungsform des Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des Verfahrens durchzuführen. Der Programmcode kann in einem Datenspeicher der Prozessoreinrichtung gespeichert sein. Die Prozessoreinrichtung kann z.B. auf zumindest einer Schaltungsplatine und/oder auf zumindest einem SoC (System on Chip) basieren.

Weiterbildungen des Verfahrens, weisen möglicherweise Merkmale auf, wie sie bereits im Zusammenhang mit den Weiterbildungen des erfindungsgemäßen Kraftfahrzeugs beschrieben worden sind. Aus diesem Grund sind die entsprechenden Weiterbildungen des Verfahrens hier nicht noch einmal beschrieben. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Als eine weitere Lösung ist auch ein computerlesbares Speichermedium denkbar, umfassend Programmcode, der bei der Ausführung durch einen Computer oder einen Computerverbund diesen veranlasst, eine Ausführungsform des Verfahrens auszuführen. Das Speichermedium kann zumindest teilweise als ein nicht-flüchtiger Datenspeicher (z.B. als eine Flash-Speicher und/oder als SSD - solid state drive) und/oder zumindest teilweise als ein flüchtiger Datenspeicher (z.B. als ein RAM - random access memory) bereitgestellt sein. Das Speichermedium kann in dem Computer oder Computerverbund angeordnet sein. Das Speichermedium kann aber auch beispielsweise als sogenannter Appstore-Server und/oder Cloud-Server im Internet betrieben sein. Durch den Computer oder Computerverbund kann eine Prozessorschaltung mit beispielsweise zumindest einem Mikroprozessor bereitgestellt sein. Der Programmcode kann als Binärcode und/oder als Assembler-Code und/oder als Quellcode einer Programmiersprache (z.B. C) und/oder als Programmskript (z.B. Python) bereitgestellt sein.

Im Folgenden sind Ausführungsbeispiele der Erfindung beschrieben. Hierzu zeigt:
- Fig. 1: eine schematische Darstellung eines erfindungsgemäßen Kraftfahrzeugs und einer Anordnung, welche in dem Kraftfahrzeug integriert ist;
- Fig. 2: eine schematische Darstellung von Komponenten der Anordnung aus Fig. 1;
- Fig. 3: eine beispielhafte Einbausituation der Anordnung aus Fig. 1 im Bereich einer Instrumententafel des Kraftfahrzeugs;
- Fig. 4: eine schematische Schnittdarstellung des Gezeigten aus Fig. 3;
- Fig. 5: eine weitere beispielhafte Darstellung der Anordnung aus Fig. 3; und
- Fig. 6: eine schematische Darstellung der Anordnung aus Fig. 1 in Kombination mit einem Head-up-Display.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

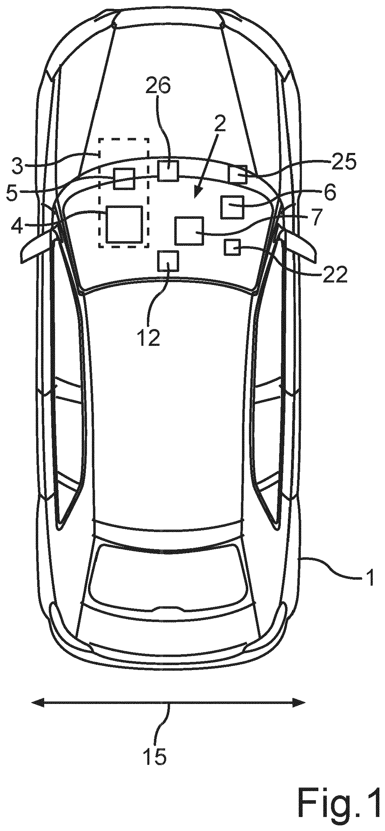

In der Fig. 1 ist eine schematische Ansicht, insbesondere von oben, eines Kraftfahrzeugs 1 gezeigt.

Das Kraftfahrzeug 1 kann optional mit einer Anordnung 2 ausgestattet beziehungsweise ausgerüstet werden. Somit kann die Anordnung 2 in das Kraftfahrzeug 1 integriert werden. Die Anordnung 2 weist beispielsweise ein Schwarzdruck-Anzeigesystem 3 auf. Dieses Schwarzdruck-Anzeigesystem 3 dient insbesondere zur Anzeige von Informationen beziehungsweise Bildern in einem Sichtfeld eines Fahrers und/oder Beifahrers des Kraftfahrzeugs 1. Hierzu kann das Schwarzdruck-Anzeigesystem 3 zumindest eine Anzeigeeinheit 4 oder mehrere solcher Anzeigeeinheiten aufweisen. Mit Hilfe der Anzeigeeinheit 4, welche beispielsweise als "Black-Print-Display" bezeichnet werden kann, können Bilder auf einer Schwarzdruckfläche 5 dargestellt werden. Bei der Schwarzdruckfläche 5 kann es sich um einen Schwarzdruckbereich handeln.

Um das Schwarzdruck-Anzeigesystem 3 effizient betreiben zu können, indem die Ausfallwahrscheinlichkeit des Schwarzdruck-Anzeigesystems 3 minimiert wird und die Lebensdauer erhöht werden kann, kann ein Kühlsystem 6 und/oder eine Reinigungseinrichtung 7 vorgesehen sein. Mit Hilfe des Kühlsystems 6 kann das Schwarzdruck-Anzeigesystem 3 gekühlt werden, sodass es zu keiner Überhitzung des Schwarzdruck-Anzeigesystems 3 kommen kann. Mit Hilfe der Reinigungseinrichtung 7 kann wiederum das Schwarzdruck-Anzeigesystem 3 von Schmutz, Verunreinigungen, Staub, Dreck oder sonstigen Fremdkörpern gereinigt werden.

Neben dem Schwarzdruck-Anzeigesystem 3 kann das Kühlsystem 6 Bestandteil der Anordnung 2 sein. Optional kann wiederum die Reinigungseinrichtung 7 Bestandteil der Anordnung 2 sein. Besonders bevorzugt ist eine Ausgestaltung der Anordnung 2, bei welcher die Anordnung 2 das Schwarzdruck-Anzeigesystem 3, das Kühlsystem 6 und die Reinigungseinrichtung 7 aufweist. Somit kann mit Hilfe der Anordnung 2 ein Schwarzdruck-Anzeigesystem 3 in Kraftfahrzeugen effizienter und besser genutzt beziehungsweise verwendet werden.

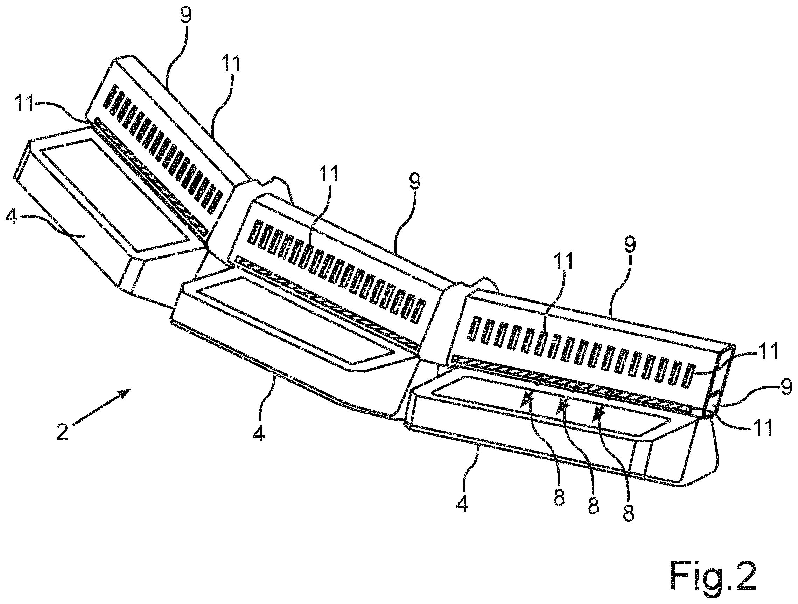

In der Fig. 2 ist zumindest eine Teilansicht der Anordnung 2 beispielhaft zu sehen. In diesem Ausführungsbeispiel kann das Schwarzdruck-Anzeigesystem 3 mehrere, insbesondere drei, Anzeigeeinheiten 4 aufweisen. Um das Schwarzdruck-Anzeigesystem 3 zumindest bereichsweise zu kühlen und/oder bereichsweise zu reinigen, kann ein Luftstrom 8 verwendet werden. Hierbei kann derselbe Luftstrom 8 sowohl für das Kühlsystem 6 als auch für die Reinigungseinrichtung 7 verwendet werden. Ebenfalls ist es denkbar, dass das Kühlsystem 6 und die Reinigungseinrichtung 7 individuell einen jeweiligen Luftstrom 8 zum Kühlen beziehungsweise Reinigen verwenden. Für das Leiten beziehungsweise das Lenken beziehungsweise das Führen des Luftstroms 8 zu einer Komponente des Schwarzdruck-Anzeigesystems 3 kann die Anordnung 2 zumindest einen Kühlkanal beziehungsweise Luftkanal 9 aufweisen. Ebenso denkbar ist, dass mehrere Kühlkanäle vorgesehen sind. Wie in der Fig. 2 beispielhaft dargestellt kann der Kühlkanal 9 so angeordnet sein, dass er zumindest bereichsweise, insbesondere vollständig, an der Anzeigeeinheit 4 anliegt beziehungsweise angeordnet ist. Wie in der Fig. 2 zu sehen, sind die Anzeigeeinheit 4 und der Kühlkanal 9 zueinander anliegend angeordnet. Somit kann der Luftstrom 8 für das Reinigen und/oder Kühlen direkt beziehungsweise gezielt in Richtung der Anzeigeeinheit 4 geleitet werden.

Der Luftkanal 9 kann ebenso als Kühlkanal bezeichnet beziehungsweise verwendet werden. Ebenso denkbar ist, dass sowohl der Kühlkanal als auch der Luftkanal als kombinierte Einheit ausgebildet sind. Ebenso denkbar ist, dass es sich bei dem Kühlkanal und bei dem Luftkanal um separate Kanäle der Anordnung 2 handelt.

Im Nachfolgenden wird der Luftkanal 9 auch als Kühlkanal 9 oder umgekehrt bezeichnet.

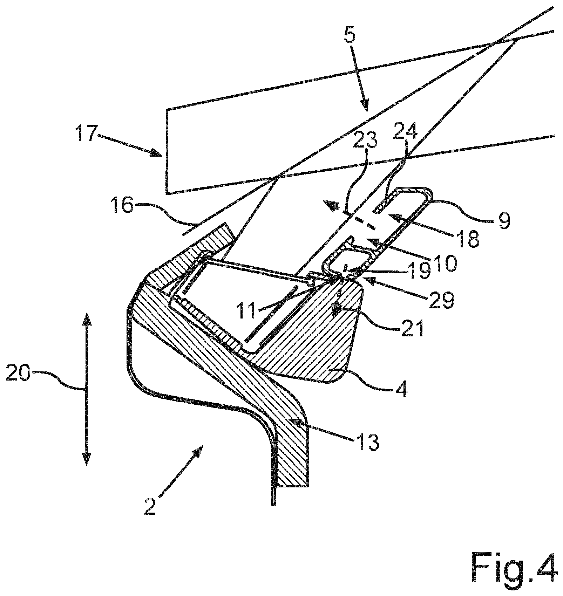

Um den Luftstrom 8 flächig an die Komponenten beziehungsweise Bereiche des Schwarzdruck-Anzeigesystems 3 leiten zu können und insbesondere im Wesentlichen alle Komponenten und/oder Bereiche des Schwarzdruck-Anzeigesystems 3 zu kühlen beziehungsweise zu reinigen, kann der Kühlkanal 9 eine Luftauslass-Einrichtung 10 (vgl. Fig. 4) aufweisen. Diese kann mechanisch und/oder elektromechanisch mit zumindest einem Luftauslass 11 gekoppelt beziehungsweise verbunden sein. Wie in der Fig. 2 beispielhaft zu sehen kann der Kühlkanal 9 eine Vielzahl von Luftauslässen aufweisen. Somit kann an einer beliebigen Stelle beziehungsweise an einem beliebigen Bereich des Schwarzdruck-Anzeigesystems 3 der Luftstrom 8 gerichtet ausströmen beziehungsweise ausgeblasen werden, um entsprechend einen Kühlvorgang und/oder einen Reinigungsvorgang vornehmen zu können. Beispielsweise können die mehreren beziehungsweise vielzähligen Luftauslässe zueinander beabstandet angeordnet sein. Wie in der Fig. 2 beispielhaft zu sehen, können die Luftauslässe 11 die Anzeigeeinheit 4 flächenmäßig mit dem Luftstrom 8 beaufschlagen, um so möglichst eine effiziente Kühlwirkung als auch einen effizienten Reinigungsvorgang durchführen zu können.

Beispielsweise können mit Hilfe der Luftauslass-Einrichtung 10 verschiedene Luftauslässe 11 so gesteuert beziehungsweise eingestellt werden, dass einige der Luftauslässe zum Reinigen und/oder Kühlen der Anzeigeeinheit 4 und andere Luftauslässe zum Kühlen und/oder Reinigen der Schwarzdruckfläche 5 dienen. Ebenso können wiederum weitere Luftauslässe 11 so eingerichtet beziehungsweise justiert werden, dass diese zum Kühlen und/oder Reinigen von sonstigen Komponenten des Schwarzdruck-Anzeigesystems 3 dienen. Beispielsweise kann die Anordnung 2 eine Steuerungseinheit 12 (vergleiche Fig. 1) aufweisen, mit welcher das Kühlsystem 6, das Reinigungseinrichtung 7 und/oder die Luftauslass-Einrichtung 10 angesteuert beziehungsweise gesteuert werden kann. Mit Hilfe der Steuerungseinheit 12 kann beispielsweise die Luftauslass-Einrichtung 10 derart gesteuert werden, dass von einem jeweiligen Luftauslass 11 eine jeweilige Luftauslassrichtung eingestellt beziehungsweise justiert werden kann.

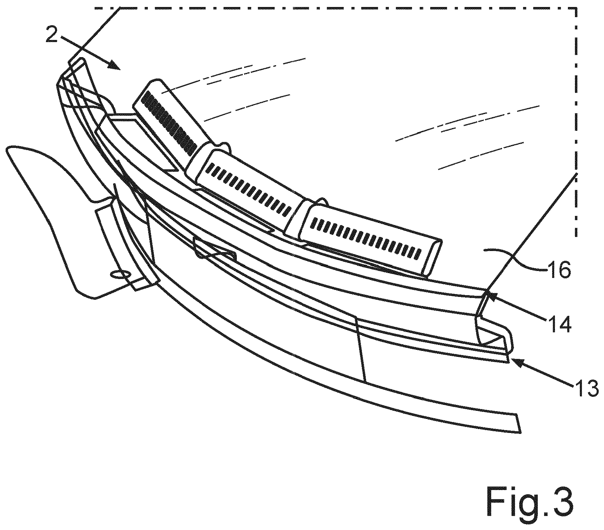

In der Fig. 3 ist eine beispielhafte Einbausituation der Anordnung 2 im Kraftfahrzeug 1 zu sehen. Insbesondere kann die Anordnung 2 im Bereich einer Instrumententafel 13 beziehungsweise eines Cockpits des Kraftfahrzeugs 1 angeordnet beziehungsweise integriert werden. Hierbei kann die Anordnung 2 in einem vorderen (zur Fahrzeugfrontseite gerichteten) Bereich der Instrumententafel 13 angeordnet sein. Insbesondere kann sich der zumindest eine Luftkanal 9 und/oder beispielsweise die Anzeigeeinheit 4 in Bezug zu einer Fahrzeugquerachse 15 (vergleiche Fig. 1) längs in einen Bereich 14 zwischen der Instrumententafel 13 und einer Frontscheibe 16 des Kraftfahrzeugs 1 erstrecken. Wie in der Fig. 3 beispielhaft dargestellt, sind die Anzeigeeinheit 4 und der Kühlkanal beziehungsweise Luftkanal 9 in einem Bereich 14 der Frontscheibe 16 angeordnet, welcher sich zum Fahrzeugboden hin erstreckt. Beispielsweise kann der Bereich 14 ein Bereich sein, welcher sich zwischen einer Fensterwurzel beziehungsweise Scheibenwurzel der Frontscheibe 16 und einem zur Fahrzeugfront gerichteten Bereich der Instrumententafel 13 erstreckt.

Insbesondere können sich der Luftkanal beziehungsweise Kühlkanal 9 und die Anzeigeeinheit 4 entlang einer Längsausdehnung beziehungsweise Längserstreckung in Bezug zur Fahrzeugquerachse 15 teilweise oder vollständig erstrecken.

In der Fig. 4 ist eine beispielhafte Schnittdarstellung beziehungsweise Ansicht eines Querschnitts der Anordnung 2 dargestellt. Zum einen ist hier die Anzeigeeinheit 4 zu erkennen, welche Lichtstrahlen in Richtung der Schwarzdruckfläche 5 ausstrahlt. An der Schwarzdruckfläche 5 kann wiederum mittels Reflexion der Strahlengang ausgehend von der Anzeigeeinheit 4 in Richtung eines Blickfelds beziehungsweise Sichtfelds eines Fahrzeuginsassen geleitet werden. Somit kann ein Bild 17, welches insbesondere als virtuelles Bild bezeichnet werden kann, dargestellt werden.

Des Weiteren ist hier im Schnitt der Kühlkanal 11 zu sehen. Wie in diesem Ausführungsbeispiel kann der Kühlkanal 11 unterteilt sein, sodass dieser mehrere Teilbereiche aufweist. Hierbei kann ein Bereich 18, welcher sich in der Fahrzeughochachse 20 betrachtet im oberen Bereich des Kühlkanals 11 befindet und ein Bereich 19, welcher sich in der Fahrzeughochachse 20 betrachtet in einem unteren Bereich des Kühlkanals 11 befindet. Beispielsweise kann zum Kühlen der Anzeigeeinheit 4 Kühlluft 21 als Luftstrom durch den Luftauslass 11, welcher in diesem Beispiel in Fahrzeughochachse 20 betrachtet in Richtung des Fahrzeugbodens gerichtet ist, ausströmen.

Vorteilhafterweise kann der Kühlkanal beziehungsweise der Luftkanal 9 in seiner Funktion erweitert werden und für weitere Anwendungen verwendet werden. Hierbei ist beispielsweise ein weiterer Anwendungsfall eine Scheibenenteisung beziehungsweise Scheibendefrostung der Frontscheibe 16. Hierzu kann die Anordnung 2 beispielsweise eine Scheibenenteisungs-Einrichtung 22 (vergleiche Fig. 1) aufweisen. Hierbei kann der Kühlkanal zum Luftkanal 9 ebenso dazu verwendet werden, um den Luftstrom 8 dazu zu verwenden, um die Frontscheibe 16 zu enteisen. Dies kann beispielsweise mittels des Bereichs 18 des Kühlkanals 9 erfolgen. Hierbei kann im Vergleich zu dem Bereich 19 ein Luftstrom 23 strömen, welcher eine höhere Temperatur im Vergleich zu der Kühlluft 21 aufweist. Hierzu kann des Weiteren ein weiterer Luftauslass 24 im Kühlkanal 9 vorgesehen sein, sodass entsprechend dieser Luftstrom 23 in Richtung der Frontscheibe 16 strömen beziehungsweise geblasen werden kann.

In einer anderen Ausführungsform kann der Kühlkanal 9 einteilig, also nicht in mehrere Teile aufgeteilt sein. Hierbei kann insbesondere mit Hilfe der Steuerungseinrichtung 12 je nachdem, ob ein Kühlvorgang, ein Reinigungsvorgang oder eine Scheibenenteisung vorgenommen werden kann, eine Einheit 25 zur Erzeugung des Luftstroms 8 angesteuert werden. Bei der Einheit 25 kann es sich beispielsweise um eine Gebläseeinheit handeln. Somit kann je nach Anwendungsfall ein individuell angepasster Luftstrom 8 erzeugt und mit Hilfe des Kühlkanals 9 und der Luftauslass-Einrichtung 10 entsprechend geleitet beziehungsweise geführt werden.

Insbesondere kann der Luftkanal beziehungsweise der Kühlkanal 9 einen Luftstrom 8 bereitstellen, um einen Reinigungsvorgang, Kühlvorgang und/oder Scheibenenteisungsvorgang vorzunehmen. Somit kann ein kombinierter Kanal bereitgestellt werden.

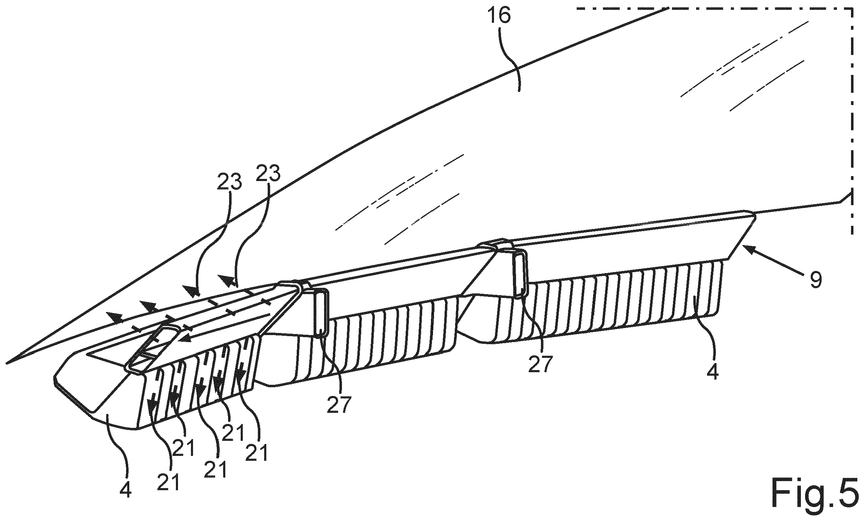

In der Fig. 5 ist eine weitere schematische Ansicht des angeordneten Luftkanals 9 und der Anzeigeeinheit 4 im Bereich 14 dargestellt. Hierbei sind Lufteinlässe 27 zu sehen, mit welchen wiederum der Luftkanal beziehungsweise Kühlkanal 9 mit Luft beziehungsweise dem Luftstrom 8 versorgt werden kann. In einer denkbaren Variante kann der Kühlkanal 9 mit der Einheit 25 über die Lufteinlässe 27 verbunden werden.

Des Weiteren ist es denkbar, dass das Kühlsystem 6 und/oder die Reinigungseinrichtung 7 und/oder der Kühlkanal 9 mit einer Klimaanlage beziehungsweise einem Klimaanlagensystem des Kraftfahrzeugs 1 kombiniert beziehungsweise verbunden sind. Somit kann wiederum die Klimaanlage des Kraftfahrzeugs 1 dazu verwendet werden, um für das Kühlsystem 6 als auch für die Reinigungseinrichtung 7 als auch für die Scheibenenteisungs-Einrichtung 22 einen Luftstrom 8 beziehungsweise Luft für den jeweiligen Arbeitsvorgang bereitzustellen.

Um automatisch einen Reinigungsvorgang und/oder Kühlvorgang des Schwarzdruck-Anzeigesystems 3 durchführen zu können, kann die Anordnung 2 eine Sensorik beziehungsweise eine Sensoreinheit 26 aufweisen. Mit der Sensoreinheit 26 kann beispielsweise ein Betriebszustand und/oder ein Verschmutzungszustand des Schwarzdruck-Anzeigesystems 3 erfasst beziehungsweise detektiert werden. Mit dem Betriebszustand wird insbesondere angegeben, welche Betriebstemperatur beziehungsweise Temperatur das Schwarzdruck-Anzeigesystem 3 aufweist. Sollte das Schwarzdruck-Anzeigesystem 3 eine kritische Temperatur, also eine Überhitzung, aufweisen, so kann automatisch ein Kühlvorgang vorgenommen beziehungsweise durchgeführt werden. Mit dem Verschmutzungszustand kann beispielsweise festgestellt werden, ob sich ein oder mehrere Fremdkörper auf einer Oberfläche des Schwarzdruck-Anzeigesystems 3 befinden. Sollte beispielsweise festgestellt werden, dass sich Staub, Schmutz, Ablagerungen, Partikel und/oder Dreck auf einer Oberfläche des Schwarzdruck-Anzeigesystems 3 befinden, so kann wiederum automatisch ein Reinigungsvorgang vorgenommen werden. Hierbei kann insbesondere mit Hilfe der Sensoreinheit 26 eine Lokalisierung des zu kühlenden und/oder des zu reinigenden Bereichs erfasst werden. Somit kann gezielt ein Kühlvorgang und/oder ein Reinigungsvorgang vorgenommen werden.

Im Falle der Integration der Anordnung 2 mit der Klimaanlage des Kraftfahrzeugs 1 kann es sich bei der Steuerungseinheit 12 um ein Steuerungsgerät der Klimaanlage handeln.

Beispielsweise kann des Weiteren in kontinuierlichen Zeitabständen beziehungsweise Zeitintervallen automatisch ein Kühlvorgang oder ein Reinigungsvorgang des Schwarzdruck-Anzeigesystems 3 vorgenommen werden. Beispielsweise kann beim Abstellen beziehungsweise Parken des Kraftfahrzeugs 1 oder beim Starten des Kraftfahrzeugs 1 automatisch ein Kühlvorgang oder ein Reinigungsvorgang vorgenommen werden.

Des Weiteren kann vorgesehen sein, dass ein Fahrzeuginsasse des Kraftfahrzeugs 1 manuell, beispielsweise über ein Bedienelement im Bereich der Instrumententafel 13 einen Kühlvorgang und/oder Reinigungsvorgang aktiviert.

Des Weiteren ist es denkbar, dass der Kühlkanal 9 zumindest einen Luftauslass zum Kühlen des Schwarzdruck-Anzeigesystems 3, zumindest einen Luftauslass zum Reinigen des Schwarzdruck-Anzeigesystems 3 und zumindest einen Luftauslass zum Enteisen der Frontscheibe 16 aufweist.

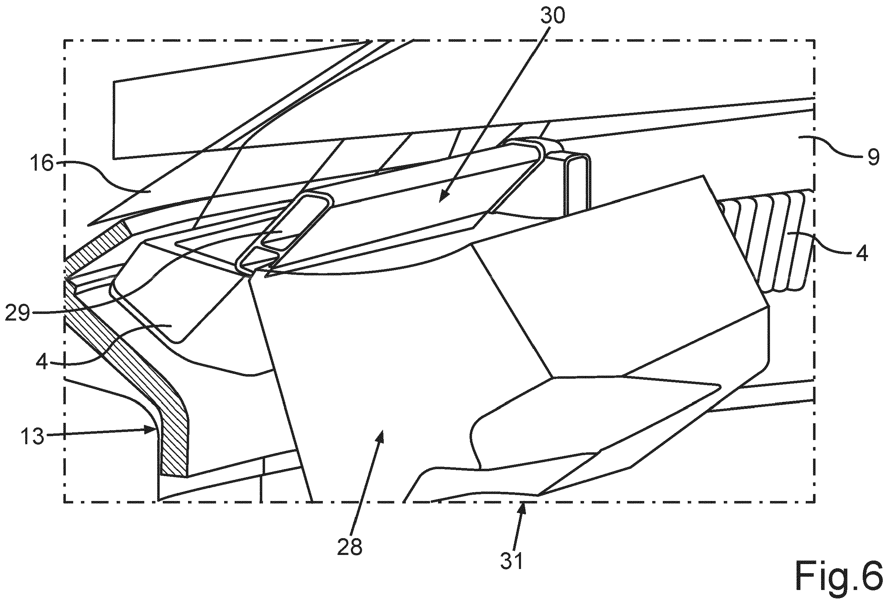

Erfindungsgemäß wird der Kühlkanal 9 als Bestandteil beziehungsweise funktionelle Einheit für ein Head-up-Display 28 verwendet. Dies wird nachfolgend in der Fig. 6 erläutert. Um insbesondere im Bereich der Instrumententafel 13 Platz beziehungsweise Bauraum einzusparen, kann an einer zur Frontscheibe 16 abgewandten Seite 29 des Luftkanals beziehungsweise Kühlkanals 9 ein Optikelement 30 angeordnet sein. Mit dem Optikelement 30 kann ein erzeugtes Bild einer Bilderzeugungseinheit 31 des Head-up-Displays 28 auf eine lichtdurchlässige Projektionsfläche in einem Bereich der Frontscheibe 16 projiziert werden. Somit kann das Head-up-Display 28 zumindest eine Komponente, nämlich das Optikelement 30, weniger aufweisen, wodurch Platz eingespart werden kann. Somit kann die Funktionalität beziehungsweise Flexibilität beziehungsweise Anwendervielfältigkeit der Anordnung 2 erhöht werden. Hierbei kann es sich bei dem Optikelement 30 um einen Spiegel oder eine Linse handeln, welche beispielsweise auf die Seite 29 aufgebracht, zum Beispiel aufgeklebt, werden kann. Ebenso denkbar ist, dass das Optikelement 30 als Beschichtung, insbesondere als reflektierende Beschichtung, ausgestaltet ist. Ebenso kann das Optikelement 30 als Spiegelbank-Beschichtung des Head-up-Displays 28 bezeichnet werden.

## Patentansprüche

1. Kraftfahrzeug (1) mit
- einer Anordnung (2), wobei die Anordnung (2) Folgendes aufweist:
- ein Schwarzdruck-Anzeigesystem (3), welches eine Anzeigeeinheit (4) zum Darstellen eines Bilds (17) auf einer Schwarzdruckfläche (5) aufweist,
- ein Kühlsystem (6) zum Kühlen des Schwarzdruck-Anzeigesystems (3), wobei das Kühlsystem (6) ausgebildet ist, abhängig von einem Betriebszustand des Schwarzdruck-Anzeigesystems (3) das Schwarzdruck-Anzeigesystem (3) zumindest bereichsweise mittels eines Luftstroms (8) zu kühlen, und
- zumindest einen Kühlkanal (9) zum Bereitstellen des Luftstroms (8), wobei der zumindest eine Kühlkanal (9) zumindest bereichsweise an der Anzeigeeinheit (4) angeordnet ist, und wobei
- die Anordnung (2) im Bereich einer Instrumententafel des Kraftfahrzeugs (1) angeordnet ist, und
- sich der zumindest eine Kühlkanal (9) in Bezug zu einer Fahrzeugquerachse (15) längs in einem Bereich (14) zwischen der Instrumententafel (13) und einer Frontscheibe (16) des Kraftfahrzeugs (1) erstreckt, wobei
- an einer zur Frontscheibe (16) abgewandten Seite (29) des zumindest einen Kühlkanals (9) ein Optikelement (30) angeordnet ist, mit welchem ein erzeugtes Bild einer Bilderzeugungseinheit (31) eines Head-up-Displays (28) des Kraftfahrzeugs (1) auf eine lichtdurchlässige Projektionsfläche in einem Bereich der Frontscheibe (16) projizierbar ist.

2. Kraftfahrzeug (1) nach Anspruch 1, wobei
der zumindest eine Kühlkanal (9) eine Luftauslass-Einrichtung (10) aufweist, welche zumindest einen Luftauslass (11) aufweist, welcher zu der Anzeigeeinheit (4) und/oder zu der Schwarzdruckfläche (5) gerichtet ist.

3. Kraftfahrzeug (1) nach Anspruch 2, wobei
die Anordnung (2) eine Steuerungseinrichtung (12) zum Steuern der Luftauslass-Einrichtung (10) aufweist, wodurch eine Luftauslassrichtung (10) des zumindest einen Luftauslasses (11) einstellbar ist.

4. Kraftfahrzeug (1) nach einem der vorhergehenden Ansprüche, wobei die Anordnung (2) eine Sensoreinheit (26) zum Erfassen des Betriebszustands des Schwarzdruck-Anzeigesystems (3) aufweist, wobei als Betriebszustand eine Temperatur des Schwarzdruck-Anzeigesystems (3) erfassbar ist.

5. Kraftfahrzeug (1) nach einem der vorhergehenden Ansprüche, wobei die Anordnung (2) eine Scheibenenteisung-Einrichtung (22) aufweist, welche zumindest einen weiteren Luftauslass (24) aufweist, welcher zu der Frontscheibe (16) gerichtet ist.

## Claims

1. A motor vehicle (1) with
- an assembly (2), wherein the assembly (2) comprises the following:
- a black print display system (3) which has a display unit (4) for displaying an image (17) on a black print surface (5),
- a cooling system (6) for cooling the black print display system (3), wherein the cooling system (6) is designed to cool the black print display system (3) at least in some regions by means of an air flow (8) depending on an operating state of the black print display system (3), and
- at least one cooling channel (9) for providing the air flow (8), wherein the at least one cooling channel (9) is arranged at least in some regions on the display unit (4), and wherein
- the assembly (2) is arranged in the region of an instrument panel of the motor vehicle (1), and
- the at least one cooling channel (9) extends longitudinally in relation to a vehicle transverse axis (15) in a region (14) between the instrument panel (13) and a windshield (16) of the motor vehicle (1),
wherein
- an optical element (30) is arranged on a side (29) of the at least one cooling channel (9) facing away from the windshield (16), with which optical element an image generated by an image generation unit (31) of a head-up display (28) of the motor vehicle (1) can be projected onto a light-transmissive projection surface in a region of the windshield (16).

2. The motor vehicle (1) according to claim 1, wherein
the at least one cooling channel (9) has an air outlet device (10) which has at least one air outlet (11) which is directed towards the display unit (4) and/or the black print surface (5).

3. The motor vehicle (1) according to claim 2, wherein
the assembly (2) comprises a control device (12) for controlling the air outlet device (10), whereby an air outlet direction (10) of the at least one air outlet (11) can be adjusted.

4. The motor vehicle (1) according to any one of the preceding claims, wherein
the assembly (2) comprises a sensor unit (26) for detecting the operating state of the black print display system (3), wherein a temperature of the black print display system (3) can be detected as the operating state.

5. The motor vehicle (1) according to any one of the preceding claims, wherein
the assembly (2) has a windshield de-icing device (22) which comprises at least one further air outlet (24) which is directed towards the windshield (16).

## Revendications

1. Véhicule automobile (1) comprenant
- un agencement (2), l'agencement (2) comprenant :
- un système d'affichage à impression noire (3) qui comprend une unité d'affichage (4) destinée à afficher une image (17) sur une surface d'impression noire (5),
- un système de refroidissement (6) destiné à refroidir le système d'affichage à impression noire (3), le système de refroidissement (6) étant conçu pour refroidir le système d'affichage à impression noire (3), au moins par zones, au moyen d'un flux d'air (8), en fonction d'un état de fonctionnement du système d'affichage à impression noire (3), et
- au moins un canal de refroidissement (9) destiné à fournir le flux d'air (8), le au moins un canal de refroidissement (9) étant disposé, au moins par zones, sur l'unité d'affichage (4), et dans lequel
- l'agencement (2) est disposé dans la zone d'un tableau de bord du véhicule automobile (1), et
- le au moins un canal de refroidissement (9) s'étend longitudinalement, par rapport à un axe transversal (15) du véhicule, dans une zone (14) située entre le tableau de bord (13) et un pare-brise (16) du véhicule automobile (1),
dans lequel
- un élément optique (30) est disposé sur un côté (29) du au moins un canal de refroidissement (9) opposé au pare-brise (16), au moyen duquel une image générée par une unité de génération d'images (31) d'un affichage tête haute (28) du véhicule automobile (1) peut être projetée sur une surface de projection translucide dans une zone du pare-brise (16).

2. Véhicule automobile (1) selon la revendication 1, dans lequel
le au moins un canal de refroidissement (9) comporte un dispositif de sortie d'air (10) qui comporte au moins une sortie d'air (11) orientée vers l'unité d'affichage (4) et/ou vers la surface d'impression noire (5).

3. Véhicule automobile (1) selon la revendication 2, dans lequel
l'agencement (2) comprend un dispositif de commande (12) destiné à commander le dispositif de sortie d'air (10), de sorte qu'une direction de sortie d'air (10) de la au moins une sortie d'air (11) puisse être réglée.

4. Véhicule automobile (1) selon l'une des revendications précédentes, dans lequel l'agencement (2) comprend une unité de détection (26) destinée à détecter l'état de fonctionnement du système d'affichage à impression noire (3), dans lequel l'état de fonctionnement est une température du système d'affichage à impression noire (3) pouvant être détectée.

5. Véhicule automobile (1) selon l'une des revendications précédentes, dans lequel l'agencement (2) comprend un dispositif de dégivrage de pare-brise (22), qui comprend au moins une autre sortie d'air (24) dirigée vers le pare-brise (16).
